# EUROPEAN PATENT SPECIFICATION

(11) **EP 2 809 489 B1**
(45) Date of publication and mention of the grant of the patent: **06.03.2019**
(21) Application number: 13743331.4
(22) Date of filing: 10.01.2013
(51) Int. Cl.: B27M 3/04, E04C 2/10, E04C 2/12, E04C 2/38, E04C 3/16, E04C 2/36, E04F 15/04, E04C 3/12, E04C 2/34, B32B 7/12, B32B 7/04, B32B 3/18, B32B 3/06, B32B 21/14, B32B 21/13, B27M 3/00, B27D 1/06

(54) **BUILDING PANEL COMPRISING A LAMELLA CORE**
BAUPLATTE MIT EINEM LAMELLENKERN
UN PANEAU DE CONSTRUCTION COMPRENANT UNE ÂME LAMELLÉE

(30) Priority: 02.02.2012 SE 1250078; 02.02.2012 US 201261594059 P
(43) Date of publication of application: 10.12.2014
(73) Proprietor: Välinge Innovation AB, 263 65 Viken (SE)
(72) Inventor: PERVAN, Darko, S-263 61 Viken (SE); BERGELIN, Marcus, S-263 52 Lerberget (SE); PÅLSSON, Agne, deceased (SE); BRÄNNSTRÖM, Hans, 26336 Höganäs (SE)
(74) Representative: Engstrand, Ola
(86) International application number: PCT/SE2013/050010
(87) International publication number: WO 2013/115704

(56) References cited:
- WO-A1-2007/068267
- WO-A1-2007/149051
- CA-A1- 2 463 192
- CH-A- 173 818
- CH-A- 310 904
- DE-C- 908 913
- DE-U1-202006 000 935
- FR-A- 1 464 112
- FR-A1- 2 718 175
- GB-A- 291 113
- US-A- 2 652 600
- US-A- 2 706 164
- US-A- 4 093 762

## Description

### Technical field and background

In the field of cores comprising several wood lamellas and building panels, e.g. floor and wall panels, the invention deals with a building panel as the one disclosed in the preamble of claim 1.

Such a building panel is known from DE202006000935U.

It is well known to produce building panels, e.g. floor panels, comprising a wood lamella core, see e.g. CA 430 631. It is also well known to produce building panels with a mechanical locking system, see e.g. WO1994026999.

An engineered wood floor generally comprises of a surface layer, a core layer and a balancing layer. The core provides stability and counteracts swelling/shrinking. Several core materials may be used such as plywood, HDF boards or a lamella core comprising several wood lamellas.

### Summary of the Invention

According to the invention, there is provided a building panel according to claim 1. The invention provides panels comprising a mechanical locking system. The mechanical locking system may be provided on long and/or short edges that may be locked with various combinations of angling and vertical or horizontal snapping. A specific objective is to improve the locking system, especially when such system is formed in a wood core.

The material used for wood lamella cores is due to cost reasons normally of low grade with a high number of knots, cracks etc. Furthermore the incoming material is in different lengths and the lengths seldom correspond to the exact length needed in the production. This causes a material waste in the production of the wood lamella core. The invention increases the share of the incoming material that is possible to use in the production of building panels with a wood lamella core.

A first aspect of the invention is a semi-product for a structural element, such as a beam, or for a core for a building panel. The semi product comprising several wood lamellas, which are arranged essentially parallel to each other and with long edge to long edge. A long edge of a first wood lamella is fixed to a long edge of an adjacent second wood lamella by a fastening element, preferably an adhesive and/or a distance element. The long edge of the first wood lamella is preferably fixed by at least two fastening elements to the long edge of the adjacent second wood lamella.

The fastening elements secure the wood lamellas in the semi-product, which makes it possible to use lower grade material with cracks or knots and/or with different lengths. This increases the surface area of core material produced per incoming volume.

The semi product is easier to handle in the production than the separate and loose wood lamellas known in the art. The invention also makes it easier to control the total length of the wood lamella core. The piece of a semi product, which is cut away to adjust the total length of the semi products to the length of a wood lamella core of a building panel, may be use in another wood lamella core.

The fastening elements furthermore assure a defined position between the wood lamellas. If the position of the wood lamellas is not fixed and the wood lamellas can be displaced easily and randomly in the process, as is the case with known technology, the result may be a few large openings, which causes a downgrading and/or may require a manual correction of large gaps.

In the production of a wood lamella building panel, with a mechanical locking system at long and short edge, normally the wood lamella core has to be replaced at the short edges with a short edge core material, which is more homogeneous, stronger and consequently more expensive than the wood lamella core. The invention makes it easier to control the total length of the wood lamella core, thus enabling the use of a smaller piece for the short edge material.

The fastening element may be an adhesive which may be e.g. a bridge adhesive, a building adhesive, an expanding adhesive or a self foaming glue such as PU-adhesive. The adhesive may be a hot melt adhesive applied with a foaming unit.

The distance elements may comprise wood fibres and said distance elements may be fixed to the first wood lamella and the adjacent second wood lamella by an adhesive, such as resins, preferably cross-linked, hot melt glue, white glue or glue comprising polyvinyl acetate or polyurethane. The distance elements may alternatively comprise veneer, recycled parts of wood lamellas, Paper, MDF, HDF, OSB, saw dust mixed with resin, or resin with a filler.

The distance between the long edge of the first wood lamella and the long edge of the adjacent second wood lamella in the core for the building panel may be in the range of about 0,5 mm to about 15 mm, preferably in the range of about 1 mm to about 5 mm generally depending among other things on the thickens of the surface layer that must overbridged the distance between the wood lamellas. The first or the second wood lamella may comprise in its length direction two pieces spaced from each other by a space at short edges of said pieces, since the distance element secures the pieces in the semi product.

The space may be arranged at one of the distance elements, in order to make the semi-product even stronger.

An enforcement element may be arranged at the space or at a knot or other weakness of a wood lamella, in order to further increase the strength of the semi-product.

A part of the distance element may be positioned in a groove in the first wood lamella.

Another part of the distance element may be positioned in another groove in the second wood lamella.

A third wood lamella may be fixed to a second wood lamella by a second distance element, a fourth wood lamella may be fixed to the third wood lamella by a third distance element, wherein the distance element, the second distance element and the third distance element are preferably arranged in a straight line. The straight line may be oriented at about 45 degrees to the longitudinal direction of the first wood lamella.

The outer long edge of the outermost wood lamella may be provided with distance elements. If several semi products are arranged next to each in the production of a building panel the distance between adjacent semi-products is secured.

The cavity between two adjacent wood lamellas may be filled with sound reducing material or insulating material.

Another aspect of the invention is a building panel comprising a wood lamella core comprising the semi product according to the first aspect, a decorative surface layer on top of the core and balancing layer under the core. The building panel may be provided with a mechanical locking system along its long edges and the distance elements are preferably arranged at the long edges at the mechanical locking system. This makes the locking system stronger and delimits the risk for tearing out parts, splinters or chips of the wood lamellas at the edge, especially at the locking element, during the profiling operation. Tearing out parts, splinters or chips of the wood lamellas at the edge is negative for the strength of the mechanical locking system and for the quality impression. The openings at the edge, if not closed by the distance elements, may also carry a lot of splinters and dust from the profiling operation. Later this can cause indentation marks when the ready boards are packed.

Another aspect of the invention is a building panel, such as a floorboard, comprising a wood lamella core, a decorative surface layer on top of the core and balancing layer under the core. The core comprises several wood lamellas, which are arranged essentially parallel to each other and with long edge to long edge. A long edge of a first wood lamella is arranged with a distance to a long edge of an adjacent second wood lamella. The long edge of the first wood lamella is fixed by a distance element to the long edge of the adjacent second wood lamella and at a first edge of the building panel. A first mechanical locking device is formed at the first edge of the building panel and at least partly in the distance elements. This makes the first mechanical locking system stronger and delimits the risk for tearing out parts, splinters or chips of the wood lamellas at the edge when the first mechanical locking device is formed, preferably by milling. Tearing out parts, splinters or chips of the wood lamellas at the edge is negative for the strength of the first mechanical locking device and for the quality impression. The openings at the edge, if not closed by the distance elements, may also carry a lot of splinters and dust from the profiling operation. Later this can cause indentation marks when the ready building panels are packed.

Preferably, the long edge of the first wood lamella is fixed by a second distance element to the long edge of the adjacent second wood lamella and at a second opposite edge of the building panel, wherein the distance element and the second distance element are arranged at a distance, preferably with a cavity in between.

A part of the distance element may be positioned in a first groove in the first wood lamella, and a part of the second distance element is positioned in a second groove in the first wood lamella in order to improve the fixation to the first wood lamella.

Preferably another part of the distance element and the second distance element are positioned in a third and a fourth groove, respectively, in the second wood lamella.

A second mechanical locking device may be formed at the second opposite edge of the building panel and at least partly in the second distance elements.

The distance element may extends to a second opposite edge of the building panel, wherein a second mechanical locking device may be formed at the second opposite edge of the building panel and at least partly in the distance elements.

The first mechanical locking device may be configured to cooperate with the second mechanical locking device at an essential identical building panel for vertical and/or horizontal locking of the building panel and the essential identical building panel.

The second locking device may comprises a locking groove at the second opposite edge of the groove panel.

The first locking device may comprises a protruding strip with a locking element. The protruding strip is enforced by the distance element between the wood lamellas. The locking element and the locking groove are configured to cooperate for the locking in the horizontal direction.

The first or the second locking device may comprises a tongue and the other of the first or the second locking device may comprises a tongue groove, wherein the tongue and the tongue groove are configured to cooperate for the locking in the vertical direction.

The distance element may be of a different material or of different properties, e.g. different wood species and/or wood with different wood fibre directions, than the wood lamellas.

The wood lamella core preferably comprises several semi products according to the first aspect.

Another aspect of the invention is a structural element, such as a beam, comprising a web of wood lamellas. The web comprises a first layer comprising wood lamellas and a second layer comprising wood lamellas. The first layer is arranged such that the length direction of at least some of the wood lamellas are oriented essentially perpendicular to the length direction of at least some of the wood lamellas in the second layer.

Preferably, essentially all wood lamellas in the first layer are arranged perpendicular to essentially all wood lamellas in second layer.

By arranging the first and the second layer such that the wood lamellas in the first layer are essentially perpendicular to the wood lamella in the second layer the strength of the structural element is increased.

To minimize the weight of the structural element the width of the distance element are preferably wider than the width of the wood lamellas.

A first wood lamella in the first layer may be fixed to a second wood lamella in the first layer by a distance element.

A first wood lamella in the second layer may be fixed to a second wood lamella in the second layer by a distance element.

The first layer may be fixed to the second layer, preferably by gluing at some of the distance elements and/or at a crossing of the first and the second layer.

A preferred embodiment is a beam comprising a first flange, attached to ends of the wood lamellas in the first and a second layer, and a second flange, attached to opposite end of the wood lamellas.

The beam may have some wood lamellas, which are arranged perpendicular to the first and the second flange, preferably at the longitudinal ends of the beam.

Another aspect of the invention is a set of rectangular building panel with a surface layer, a core and a long edge locking system. The locking system comprising a tongue and a groove for vertical locking of adjacent edges and a protruding strip with a locking element at a first edge that cooperates with a locking groove at a second adjacent edge for horizontal locking of the adjacent edges. The protruding strip comprises several sections along the joint. Said sections have different widths in the length direction of the joint and/or different material properties, e.g. different wood species and/or wood with different wood fibre directions.

The rectangular building panel may comprise a wood lamella core with lamellas that are spaced from each other in an inner part of the core.

Another aspect of the invention is a building panel with a surface layer and a multi layer wood lamella core wherein the core consists of two sets of wood lamellas, an upper set attached to the surface layer and a lower set attached to the upper set, wherein each set comprises wood lamellas spaced from each other in a main plane of the panel

The average distance between the lamellas in the lower set may be larger than the average distance between the lamellas in the upper set.

The building panel may comprise lamellas that are attached to each other with distances.

### Brief Description of the Drawings

The invention will in the following be described in connection to preferred embodiments and in greater detail with reference to the appended exemplary drawings, wherein,
- Figs 1a-c: show the production of a wood lamella core according to known technology.
- Figs 1d-e: illustrate a wood board and a batch comprising several wood boards and distance strips according to an embodiment of the invention.
- Fig. 2: illustrates a batch comprising several wood boards according to an embodiment of the invention.
- Figs 3a-3b: illustrate a semi product according to an embodiment of the invention.
- Figs 3c-d: illustrate a building panel according to an embodiment of the invention
- Figs 4a-4b: illustrate several semi product adjacent each other and a building panel respectively according to an embodiments of the invention.
- Figs 5: illustrate a method of bonding wood boards and distance strips together according to an embodiment of the invention.
- Figs 6a-c: illustrate a locking system with a protruding strip comprising different sections according to an embodiment of the invention..
- Figs 7a-f: illustrate a multi layer wood lamella core according to an embodiment of the invention.
- Figs 8a-d: illustrate a balancing layer and a core comprising spaced apart sections according to embodiments of the invention.
- Figs 9a-d: illustrate a batch and a wood board with a groove and a batch comprising such wood boards according to embodiments of the invention.
- Figs 10a-b: illustrate a batch of wood boards and distance strips and a semi product according to embodiments of the invention.
- Figs 11a-b: illustrates semi products and a beam according to embodiments of the invention.

### Detailed Description of Embodiments

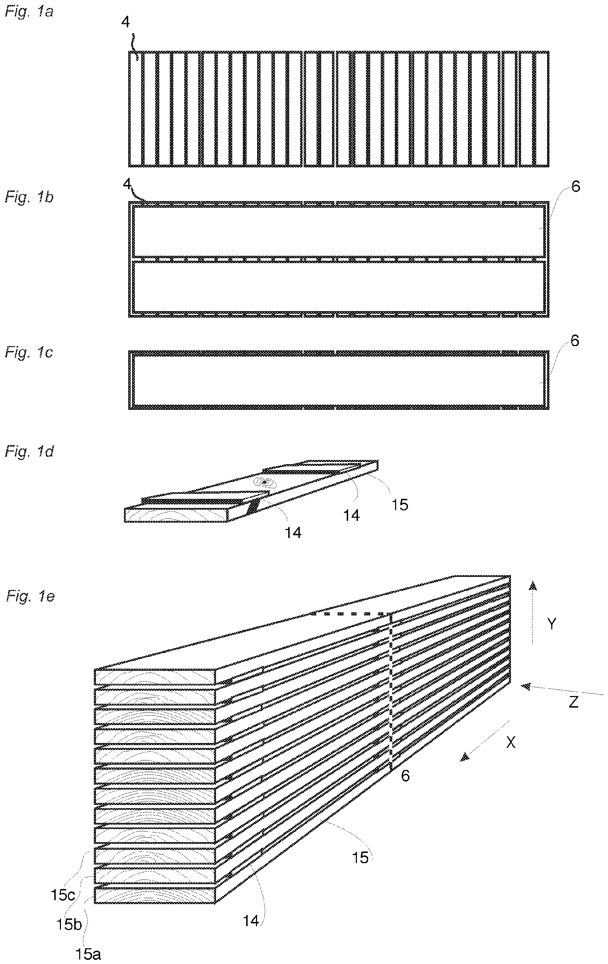

In the production of a building panel, e.g. a floor panel, with a wood lamella core it is known to arrange wood lamellas 4 parallel to each other and with a small distance between the wood lamellas as is shown in figure 1a. The distance is undefined and random. A surface layer 6 is applied and glued to the wood lamellas 4. The fibres in the wood lamella core are generally oriented perpendicular to the fibre direction of the surface layer 6. This provides a very climate stable floor panel when the surface layer is glued to the lamella core.

Generally the wood lamellas 4 have a length, which is equal to the width of two or several floor panels as is shown in fig 1b. The wood lamellas 4 are, after gluing of the surface layer 6, crosscut along a long edge of a surface layer to obtain the building panel, see fig. 1c.

A batch according to an embodiment of the invention comprising wood boards 15 and distance strips 14 are shown in fig. 1e. The wood boards 15 may be piled vertically above each other, with a distance strip 14, preferably of wood, between adjacent wood boards, as shown in fig 1a and 1b, or arranged in the same way in the horizontal direction. The distance strips 14, between, a first 15a and a second 15b, and, a second and a third 15c, adjacent wood boards, are preferably arranged vertically aligned. The wood species of the wood boards and/or the distance strips may be e.g. spruce, pine rubber wood or poplar.

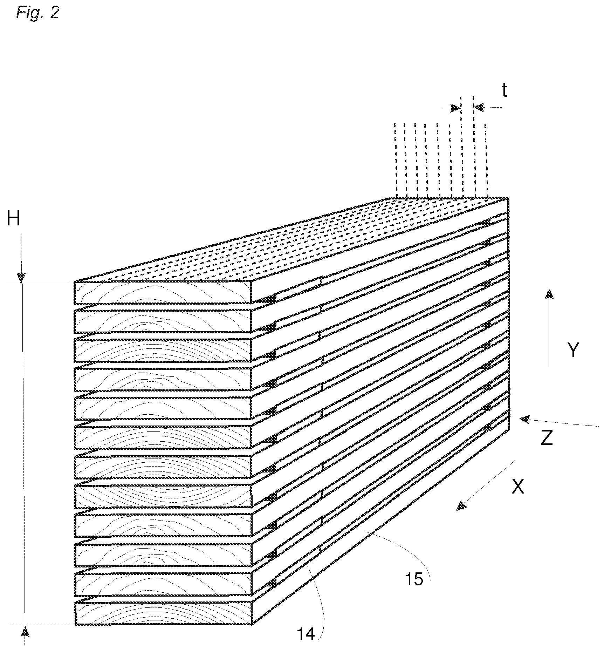

The wood boards are preferably arranged such that the annual rings are oriented in the same way, see fig 1e, and not opposite to each other, see fig 2. Different orientation of the annuals rings may cause the wood boards in the batch to crack and/or separate since the wood boards are cupping, due to humidity changes, in different direction. The cupping may be decreased by having narrower wood boards. The wood boards are preferably divided into a width, which correspond to a multiple of the thickness of desired wood lamellas plus the width of any saw cut/s between the wood lamella layers.

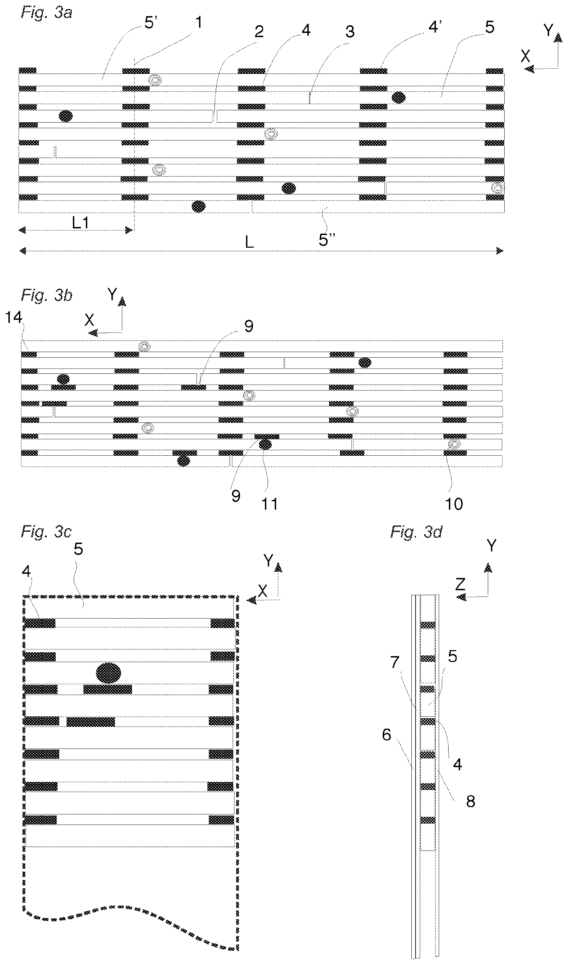

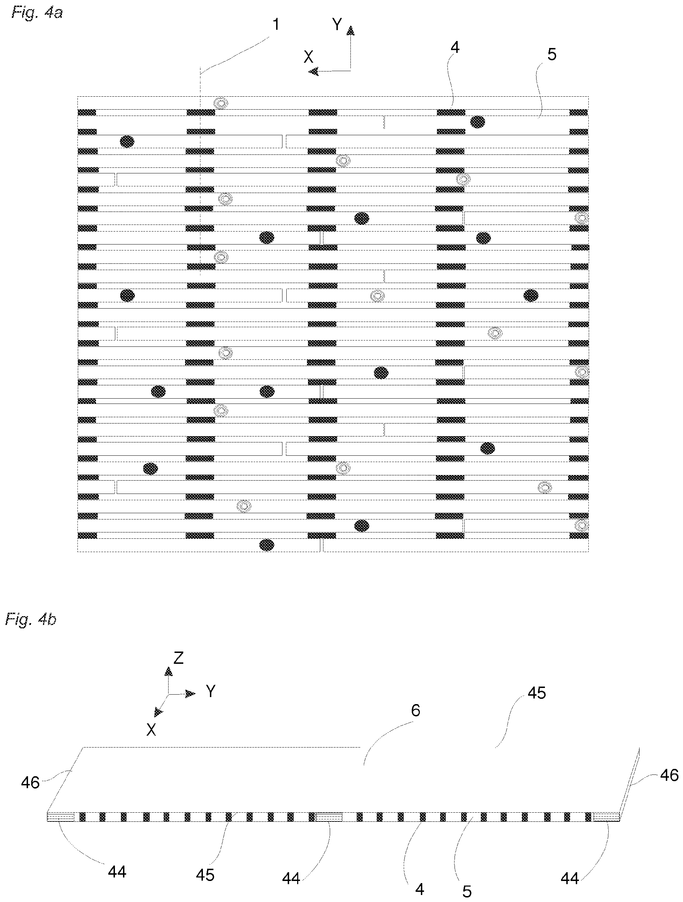

The batch may be used for producing a semi product, see fig 3a and 3b. The semi product may be used in a lamella wood core intended of a building panel, see fig 3c and 4b.

Each distance strip 14 is fixed to the adjacent(s) wood boards 15 by an adhesive, e.g., such as resins, preferably cross-linked, hot melt glue, white glue, glue comprising polyvinyl acetate or polyurethane or expanding/foaming glue. The longitudinal direction Z of the distance strips 14 is preferably perpendicular to the longitudinal direction X of the wood boards 15.

The wood boards are divided several times by cutting in its longitudinal direction X, forming a wood lamella 5, 5', 5" of the semi product, as shown in figure 3a, and the distance strip is in the same cutting cross cut, forming a distance element 4, 4' of the semi product.

The distance t between two adjacent cuts corresponds essentially to the thickness of the semi-product and thickness of the wood lamellas. The distance L1, in the longitudinal direction of the wood lamellas X, between two adjacent distance elements 4, corresponds preferably to the width of a ready made building panel, see fig 3a. The total length L of the semi-product, in the longitudinal direction of the wood lamellas X, is preferably essentially equal to a multiple of the width, including any mechanical locking system, of a ready-made building panel.

Knots 10 or other weaknesses 11 of the wood lamellas in the semi product are preferably enforced with an enforcement element 9, if they are not positioned at a distance element 4. The wood lamella may comprise two pieces of wood in the longitudinal direction. The short edges of two adjacent pieces may be close to each other 3 or positioned at some distance 2. The short edges close to each other may be glued to each other and the short edges positioned at some distance may be provided with an enforcement element 9. The short edges of said two adjacent pieces may also be positioned at a distance element 4. The wood lamellas are preferably arranged such that short edges of a first wood lamella, with short edges between a pair of adjacent distance element, is not positioned next to a second wood lamella with short edges positioned in the longitudinal direction X between said pair of distance element of the second wood lamella.

A wood lamella 5' at the outer edge of the semi product may be provided with a distance element 4'. The purpose with this distance element 4' is to position a first semi product at the desired distance from a second semi product when the first and the second semi product is arranged next to each other, see fig 3a and 4a.

Fig 3c and 3d disclose a building panel, preferably a floor panel, with a core comprising the semi products described above (section L1 in figure 3a). The building panel is shown from above fig 3c and in a side view 3d. The building panel further comprises a surface layer 6, preferably comprising wood or a wood veneer, and a balancing layer 8. Optionally the building panel may comprise a supporting layer 7, e.g. a thin board or a veneer, in order to avoid telegraphing in top surface of the decorative layer 6. At the same time the thickness of surface layer 6 can be reduced.

Fig 4a discloses several semi-products arranged in a set long side to long side to be used as an element for the production of building panels, see fig 4b. In the production of building panels several decorative layers 6 may be positioned on one side of said set, preferably with their longitudinal direction perpendicular to the longitudinal direction of the wood lamellas 5 of the semi products. The length of the set, in a direction Y perpendicular to the longitudinal direction of the wood lamellas 5 in the semi products, is preferably about the same as the length of a ready made building panel.

A long edge 45 of a decorative layer 6 may be arranged along a line 1 of distance elements 4. A balancing layer 8 may be arranged on the other side of the set at each position of a decorative layer 6. The set is preferably cut along said line 1 and a mechanical locking system formed along the long edges of the building panel.

A core material of different material 44, e.g. a piece of plywood, may be positioned in the set at a position, which corresponds to a short edge 46 of the decorative layer. Different material 44 may be positioned at both short edges 46 of the decorative layer. Preferably a mechanical locking system is produced along the short edges of the decorative layer and in the core material of different material. A core material of different material 44, e.g. a piece of plywood, may also be positioned in the set at a position that is essentially in the middle of the decorative layer, or at any position were it may be desired to crosscut the building panel and provide the edge with a mechanical locking system.

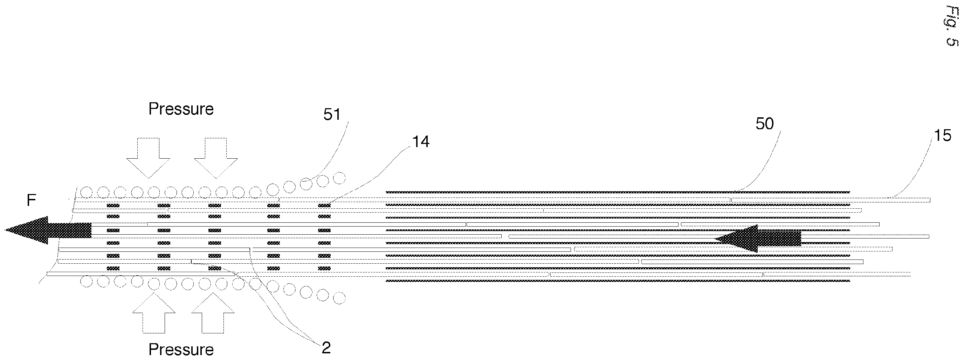

Fig 5 shows an embodiment of arranging and fixing the wood boards 15 and the distance strips 14 to each other to obtain an endless batch. The wood boards 15 are continuously fed between several guiding means 50 positioned above each other. The wood boards are shown arranged above each other in a pile, but may also be arranged next to each other in a horizontal direction. The ends of the wood boards are positioned, in the longitudinal direction of the wood boards, in the batch at irregular positions, i.e. the ends are not arranged aligned. Distance strips 14 are positioned between the wood boards 15 and an adhesive, preferably a glue, such as resins, preferably cross-linked, hot melt glue, white glue or glue comprising polyvinyl acetate or polyurethane, is applied, and the wood boards are gradually pressed together by pressing devices 51. Wood boards 15 pre-cut to the same length may also be used to create a batch with essentially the same length as the pre-cut wood boards.

Enforcement strips or elements may also be positioned at knots, weakness or between short edges of two adjacent wood boards that are fed after each other. A vision system, comprising e.g. a camera and a computer, may be used to position the enforcement strips and elements at the correct position.

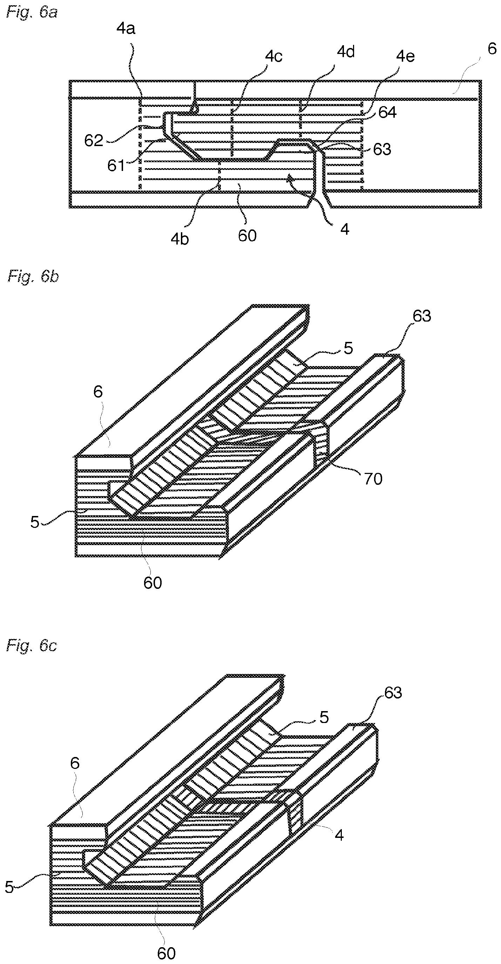

Figure 6a-c show a building panel comprising a wood lamella core and a surface layer 6. A first wood lamella 5 is fixed to a second adjacent wood lamella by a distance element 4. The building panel is provided with a long edge locking system. The locking system comprises a first locking device at a first long edge and a second locking device at a second opposite long edge. The first locking device comprises a groove 62 and a protruding strip 60 with a locking element 63 at a first long edge. The second locking device comprises a locking groove 64 and tongue 61.

The first locking device is configured to cooperate with the second locking device at an essentially identical adjacent building panel. The tongue 61 and the groove 62 cooperate for vertical locking of the first and the second edge of said two essentially identical building panels. The locking element 63 and the locking groove 64 cooperate for horizontal locking of the first and the second edge of said two essentially identical building panels.

The distance element 4 at the first edge preferably extends to an inner position 4a such that it covers the essentially whole groove 62. The advantage is that there is no open space 70 at the edge and between the wood lamellas 5, see figure 6b, for accumulation of dust and splinters. Preferably the distance element 4 extends to an outer position at the outer edge of the locking element. This gives a strong locking and a more smooth machining since splitting of the locking element 63 at the outer edge of the wood lamella may be avoided, since the adjacent wood lamellas 5 are glued to the distance element 4 as shown in figure 6c.

The distance element 4 at the first edge may also extend to an outer position 4b such that only a part of the strip 60 is covered. The distance element 4 may also extend to an inner position such that an opening is created between adjacent wood lamellas.

The locking system is made even stronger vertically if the distance element 4 at the second edge extends to the outer end of the tongue and to an inner position 4c such that the distance element 4 covers the whole tongue 61. The horizontal strength is improved if the distance element at the second edge extends to an inner position 4d, such that the distance element covers a part of the locking groove 64, that cooperates with the locking element 63 for horizontal locking.

The distance element 4 at the second edge may also extend to an inner position 4e, such that the distance element covers essentially the whole locking groove 64, in order to avoid accumulation of dust and splinters.

A preferred locking system of the building panel comprises a locking strip 60, which comprises a first section, with a first wood fibre direction, and a second section with a second wood fibre direction. In the embodiments shown in fig 6a-c the first section is created by a wood lamella and the second section is created by the distance element.

A locking system of the building panel may further comprise a protruding strip 60 that comprises sections with different materials and/or widths along the joint.

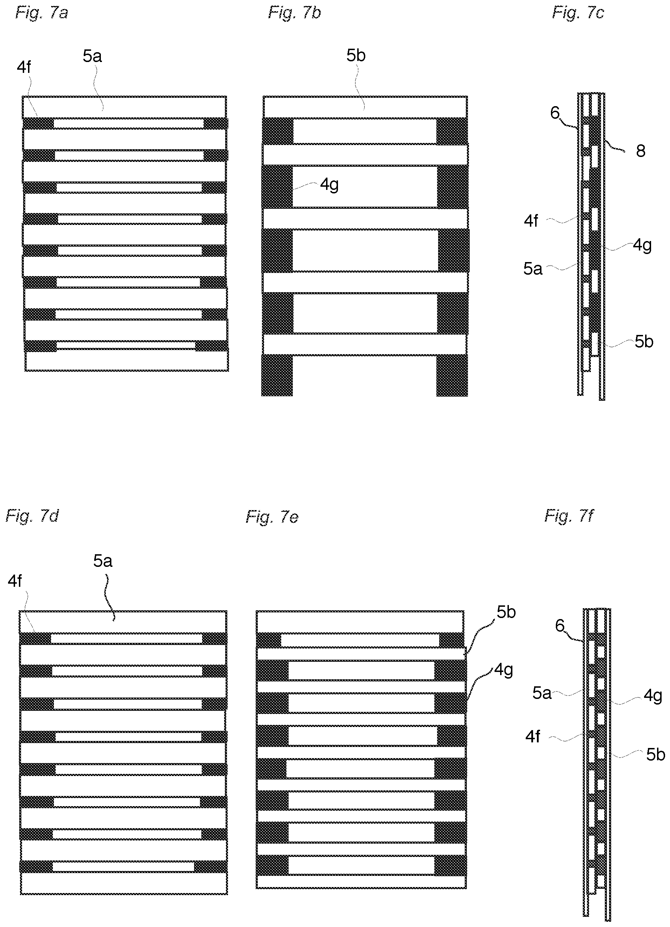

Figures 7a - 7c show that further cost savings may be reached by forming a core comprising wood lamellas 5a, 5b with different widths and/or distance elements 4f, 4g with different width. The core comprises two sets of wood lamellas, an upper and a lower set. The average width of the distance elements 4g between the wood lamellas 5a in the lower set may be larger than the average width of the distance elements 4f between the wood lamellas 5b in the upper set. The average width of the wood lamellas 5b in the lower set may be smaller than the average width of the wood lamellas 5a in the upper set. A layer may be applied between the upper and the lower set, which is sound absorbing or thermally insulating.

It is possible to use more than two sets of wood lamellas and different materials may be used in the upper and lower wood lamellas and also in the same wood lamella set.

Such a multi layer wood lamella core may provide considerable material savings. The weight of the panels may be reduced and this reduces the transport costs and makes installation easier, especially when the panels are of considerable length.

The space between the wood lamellas may be filled with different types of materials, preferably with materials that have a lower density than the wood material. This may be used to reduce sound and/or to change the sound frequency.

The spaces between wood lamellas may also be used to include materials that have a better heat transmission than wood material to obtain an improved floor heating.

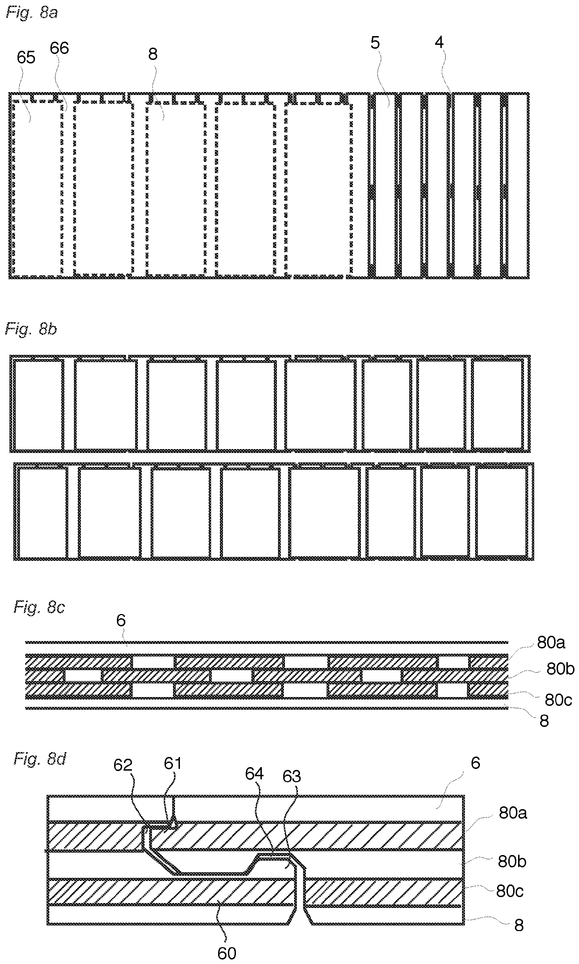

Figure 8a shows that cost savings may also be reached by modifying the balancing layer 8 on the rear side of a panel. The balancing layer in known multi layer floor panels is generally a wood veneer that covers the whole rear side. It is according to the invention possible to glue several veneer strips 65 to the wood lamellas 5 with a distance 66 between the veneer strips 65. The precise positioning of the wood lamellas makes it possible to position the strips 65 such that they preferably always cover all spaces between the wood lamellas. The distance between the veneer strips may be increased if for example the wood lamellas that cover a space between adjacent veneer strips are preferably produced with a larger width than other wood lamellas. This means that the wood lamellas in the core may have different widths.

Figure 8b show two panels that have been created by cutting the wood lamella core e.g. by sawing.

The method to form a balancing layer with separated materials, preferably with veneer strips as described above, may be combined with all other described embodiments.

The method to save material with several backing strips may also be used in panels with a conventional wood lamella core or in panels with a core comprising sheet material such as for example HDF, MDF or plywood.

The multi layer core described above may also be used in panels where the core comprises HDF/ MDF or plywood lamellas.

Figure 8c shows a side view of a building panel, preferably a wood based floor panel, comprising a surface layer 6, a balancing layer 8 and a core that is formed by several layers of wood veneer strips 80a, 80b, and 80c connected to each other, preferably with glue. The veneer strips are spaced from each other. Distance elements are not needed in this embodiment, since a veneer may be cut with knives into veneer strips with well-defined widths which are positioned and glued side by side with intermediate well defined distances and in at least two layers one over the other. The fibre direction may be the same in all core layers. Distance elements may be used at edge portions of the final panel. This embodiment offers the advantages that no waste is caused by the knife cutting and that a large portion of the wood veneers may be used when a large veneer sheet is cut into smaller strips. Cost savings of more than 25% may be reached compared to for example a solid plywood core.

The wood veneer strips may be partly or completely replaced by strips formed from a sheet material for example HDF/MDF. Thin HDF is rather expensive. It is therefore preferred to use a thicker board that may be sliced into thinner material.

A preferred embodiment is a floor panel with a surface layer 6 with a thickness of about 1-3 mm, at least three layers of veneer strips (80a, 80b, 80c) with a thickness of about 1-3 mm and a width of about 20 - 30 mm, and a balancing layer with thickness of about 1-3 mm.

Figure 8d shows a locking system formed in a core comprising three layers of veneer strips as shown in figure 8c. The locking strip 60 is preferably formed in the lower 80c and the middle layer 80b. The locking element 63 and the locking groove 64 are preferably formed in the same layer, preferably the middle layer 80b, to obtain a stronger locking.

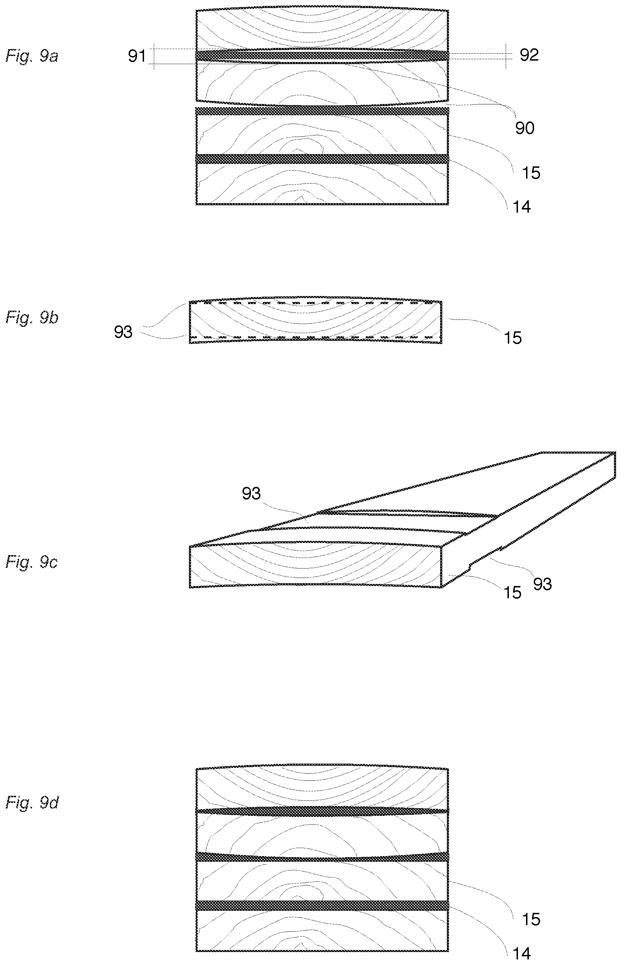

Figure 9a shows a batch comprising cup shaped wood boards 15 and straight wood boards. The fixation strength between a distance strip 14 and a cup shaped wood boards is reduced since the distance 91, 92 between to adjacent wood boards varies over the width of the adjacent wood boards. The distance variation may also result in that the wood boards crack when the wood boards in the batch are pressed together after that glue is applied between the distance strips and the wood boards. To improve the fixation strength to a cup shaped wood board a groove 93, with a planar fixation surface, is formed in the surface of the wood board 15, as is shown in figures 9b,c. The distance strip 14 is attached in the groove, preferably by gluing the distance strip to the fixation surface. Figure 9d shows a batch with straight and cup shaped wood boards 15, which are provided with grooves 93 and distance strips 14 glued to the fixation surfaces of the grooves.

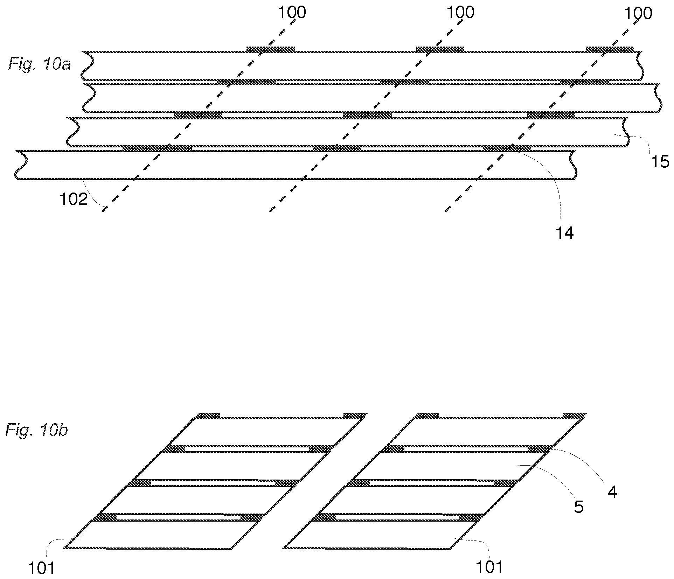

Figure 10a shows a batch comprising piled wood boards 15 and distance strips 14 arranged between adjacent wood boards. The distance strips 14 between the wood boards are arranged in straight lines 100. The straight lines are oriented at an angle of about 45 degrees to the longitudinal direction of the wood boards. Each strip is glued to the adjacent wood boards.

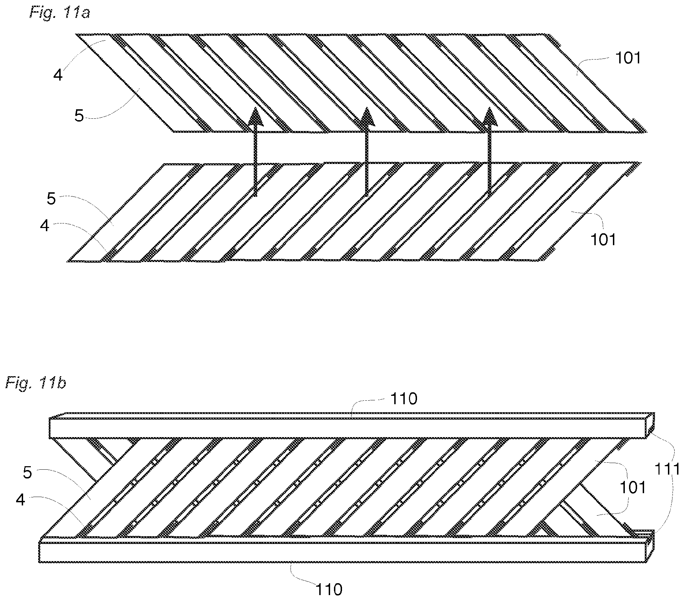

A semi product 101 for a structural element, such as a beam, may be produced by dividing the batch along the longitudinal direction of the wood boards and cutting along the straight line 100. Two such semi products are shown in figure 10b. The wood boards are divided into wood lamellas 5 and the distance strips into distance elements 4. By turning one of the semi products, such that the lamellas of the two semi products are oriented perpendicular to each other and arranging them on each other, see fig 11a, a web for a structural element, such as a beam may be obtained, comprising a first layer comprising one of the two semi-products and a second layer comprising the other of the two semi products.

Figure 11b shows a beam with a web comprising two semi products 101. The web comprises a first layer 101 comprising wood lamellas 5 and a second layer 102 comprising wood lamellas 5. The first layer is arranged such that the length direction of the wood lamellas is oriented essentially perpendicular to the length direction of the wood lamellas in the second layer.

A first wood lamella 5 in the first layer 101 is fixed to a second wood lamella in the first layer by a distance element 4.

A first wood lamella 5 in the second layer is fixed to a second wood lamella in the second layer 101 by a distance element 4.

The width of the distance element 4 may be larger than the width of the first wood lamella 5 and/or the width of the second wood lamella (not shown).

The first layer may be fixed to the second layer, preferably by gluing at some of the distance elements and/or at a crossing of lamellas of the first and the second layer.

A first flange 111 is attached to ends of the wood lamellas in the first and a second layer, and a second flange 111 is attached to opposite end of the wood lamellas.

The web may comprise some wood lamellas which are oriented essentially pependicular to the first and the second flange (not shown).

## Claims

1. Building panel, such as a floorboard, comprising a wood lamella core, a decorative surface layer (6) on top of the core and balancing layer (8) under the core, the core comprises several wood lamellas (5), which are arranged essentially parallel to each other and with long edge to long edge and a long edge of a first wood lamella is arranged with a distance to a long edge of an adjacent second wood lamella, wherein the long edge of the first wood lamella is fixed by a distance element (4) to the long edge of the adjacent second wood lamella and at a first edge of the building panel, **characterized in**
**that** a first mechanical locking device is formed at the first edge of the building panel and at least partly in the distance elements.

2. The building panel as claimed in claim 1, wherein the long edge of the first wood lamella is fixed by a second distance element (4) to the long edge of the adjacent second wood lamella and at a second opposite edge of the building panel, wherein the distance element and the second distance element are arranged at a distance, preferably with a cavity in between.

3. The building panel as claimed in claim 2, wherein a part of the distance element (4) is positioned in a first groove (93) in the first wood lamella, and a part of the second distance element (4) is positioned in a second groove (93) in the first wood lamella.

4. The building panel as claimed in claim 3, wherein, wherein another part of the distance element (4) and the second distance element are positioned in a third and a fourth groove (93), respectively, in the second wood lamella.

5. The building panel as claimed in any one of the claims 2-4, wherein a second mechanical locking device is formed at the second opposite edge of the building panel and at least partly in the second distance elements.

6. The building panel as claimed in claim 1, wherein the distance element extends to a second opposite edge of the building panel, wherein a second mechanical locking device is formed at the second opposite edge of the building panel and at least partly in the distance elements.

7. The building panel as claimed in claim 5 or 6, wherein the first mechanical locking device is configured to cooperate with the second mechanical locking device at an essential identical building panel for vertical and/or horizontal locking of the building panel and the essential identical building panel.

8. The building panel as claimed in any one of the claims 5-6, wherein the second locking device comprises a locking groove (64) at the second opposite edge of the groove panel.

9. The building panel as claimed in any one of the preceding claims, wherein the first locking device comprises a protruding strip (60) with a locking element (63).

10. The building panel as claimed in claim 7, wherein the first locking device comprises a protruding strip (60) with a locking element (63) and the second locking device comprises a locking groove (64) at the second adjacent edge, wherein the locking element and the locking groove are configured to cooperate for the locking in the horizontal direction.

11. The building panel as claimed in claim 10 or 7, wherein one of the first or the second locking device comprises a tongue (61) and the other of the first or the second locking device comprises a tongue groove (62), wherein the tongue and the tongue groove are configured to cooperate for the locking in the vertical direction.

12. The building panel as claimed in any one of the preceding claims, wherein the distance element is of a different material or of different properties, e.g. different wood species and/or wood with different wood fibre directions, than the wood lamellas

## Patentansprüche

1. Gebäudeplatte, wie beispielsweise eine Bodenplatte, die einen Holzlamellen-Kern, eine Zier-Oberflächenschicht (6) über dem Kern sowie eine Ausgleichsschicht (8) unter dem Kern umfasst, wobei der Kern mehrere Holzlamellen (5) umfasst, die im Wesentlichen parallel zueinander und mit langer Kante an langer Kante angeordnet sind, eine lange Kante einer ersten Holzlamelle in einem Abstand zu einer langen Kante einer angrenzenden zweiten Holzlamelle angeordnet ist und die lange Kante der ersten Holzlamelle über ein Distanz-Element (4) an der langen Kante der angrenzenden zweiten Holzlamelle und an einer ersten Kante der Gebäudeplatte befestigt ist, **dadurch gekennzeichnet, dass**
eine erste mechanische Verriegelungseinrichtung an der ersten Kante der Gebäudeplatte und wenigstens teilweise in den Distanz-Elementen ausgebildet ist.

2. Gebäudeplatte nach Anspruch 1, wobei die lange Kante der ersten Holzlamelle über ein zweites Distanz-Element (4) an der langen Kante der angrenzenden zweiten Holzlamelle und an einer zweiten gegenüberliegenden Kante der Gebäudeplatte befestigt ist und das Distanz-Element und das zweite Distanz-Element in einem Abstand, vorzugsweise mit einem Hohlraum zwischen ihnen, angeordnet sind.

3. Gebäudeplatte nach Anspruch 2, wobei ein Teil des Distanz-Elementes (4) in einer ersten Nut (93) in der ersten Holzlamelle positioniert ist und ein Teil des zweiten Distanz-Elementes (4) in einer zweiten Nut (93) in der ersten Holzlamelle positioniert ist.

4. Gebäudeplatte nach Anspruch 3, wobei ein anderer Teil des Distanz-Elementes (4) und des zweiten Distanz-Elementes in einer dritten bzw. einer vierten Nut (93) in der zweiten Holzlamelle positioniert ist.

5. Gebäudeplatte nach einem der Ansprüche 2-4, wobei eine zweite mechanische Verriegelungseinrichtung an der zweiten gegenüberliegenden Kante der Gebäudeplatte und wenigstens teilweise in den zweiten Distanz-Elementen ausgebildet ist.

6. Gebäudeplatte nach Anspruch 1, wobei sich das Distanz-Element zu einer zweiten gegenüberliegenden Kante der Gebäudeplatte erstreckt und eine zweite mechanische Verriegelungseinrichtung an der zweiten gegenüberliegenden Kante der Gebäudeplatte und wenigstens teilweise in den Distanz-Elementen ausgebildet ist.

7. Gebäudeplatte nach Anspruch 5 oder 6, wobei die erste mechanische Verriegelungseinrichtung so ausgeführt ist, dass sie mit der zweiten mechanischen Verriegelungseinrichtung an einer im Wesentlichen identischen Gebäudeplatte zusammenwirkt, um die Gebäudeplatte und die im Wesentlichen identische Gebäudeplatte vertikal und/oder horizontal zu verriegeln.

8. Gebäudeplatte nach einem der Ansprüche 5-6, wobei die zweite Verriegelungseinrichtung eine Verriegelungs-Nut (64) an der zweiten gegenüberliegenden Kante der Nut-Platte umfasst.

9. Gebäudeplatte nach einem der vorangehenden Ansprüche, wobei die erste Verriegelungseinrichtung einen vorstehenden Streifen (60) mit einem Verriegelungs-Element (63) umfasst.

10. Gebäudeplatte nach Anspruch 7, wobei die erste Verriegelungseinrichtung einen vorstehenden Streifen (60) mit einem Verriegelungs-Element (63) umfasst und die zweite Verriegelungseinrichtung eine Verriegelungs-Nut (64) an der zweiten angrenzenden Kante umfasst und das Verriegelungs-Element und die Verriegelungs-Nut so ausgeführt sind, dass sie zum Verriegeln in der horizontalen Richtung zusammenwirken.

11. Gebäudeplatte nach Anspruch 10 oder 7, wobei die erste oder die zweite Verriegelungseinrichtung eine Feder (61) umfasst, die andere von der ersten und der zweiten Verriegelungseinrichtung eine Feder-Nut (62) umfasst und die Feder und die Feder-Nut so ausgeführt sind, dass sie zum Verriegeln in der vertikalen Richtung zusammenwirken.

12. Gebäudeplatte nach einem der vorangehenden Ansprüche, wobei das Distanz-Element aus einem anderen Material, z.B. einer anderen Holzart und/oder Holz mit anderen Holzfaser-Richtungen, besteht oder andere Eigenschaften aufweist als die Holzlamellen.

## Revendications

1. Panneau de construction, comme un panneau de plancher, comprenant une âme à lamelles de bois, une couche de surface décorative (6) au-dessus de l'âme et une couche d'équilibrage (8) sous l'âme, l'âme comprend plusieurs lamelles de bois (5), qui sont disposées sensiblement parallèlement les unes aux autres et avec bord long contre bord long et un bord long d'une première lamelle de bois est disposé avec une distance à un bord long d'une seconde lamelle de bois adjacente, où le bord long de la première lamelle de bois est fixé par un élément d'écartement (4) au bord long de la seconde lamelle de bois adjacente et à un premier bord du panneau de construction, **caractérisé en ce que**
un premier dispositif de blocage mécanique est formé au niveau du premier bord du panneau de construction et au moins en partie dans les éléments d'écartement.

2. Panneau de construction selon la revendication 1, où le bord long de la première lamelle de bois est fixé par un second élément d'écartement (4) au bord long de la seconde lamelle de bois adjacente et à un second bord opposé du panneau de construction, où l'élément d'écartement et le second élément d'écartement sont disposés à une distance, de préférence avec une cavité entre eux.

3. Panneau de construction selon la revendication 2, où une partie de l'élément d'écartement (4) est positionnée dans une première rainure (93) dans la première lamelle de bois, et une partie du second élément d'écartement (4) est positionnée dans une seconde rainure (93) dans la première lamelle de bois.

4. Panneau de construction selon la revendication 3, où une autre partie de l'élément d'écartement (4) et du second élément d'écartement sont positionnées dans une troisième et une quatrième rainure (93), respectivement, dans la seconde lamelle de bois.

5. Panneau de construction selon l'une quelconque des revendications 2-4, où un second dispositif de blocage mécanique est formé au niveau du second bord opposé du panneau de construction et au moins en partie dans les seconds éléments d'écartement.

6. Panneau de construction selon la revendication 1, où l'élément d'écartement s'étend jusqu'à un second bord opposé du panneau de construction, où un second dispositif de blocage mécanique est formé au niveau du second bord opposé du panneau de construction et au moins en partie dans les éléments d'écartement.

7. Panneau de construction selon la revendication 5 ou 6, où le premier dispositif de blocage mécanique est configuré pour coopérer avec le second dispositif de blocage mécanique au niveau d'un panneau de construction sensiblement identique pour le blocage vertical et/ou horizontal du panneau de construction et du panneau de construction sensiblement identique.

8. Panneau de construction selon l'une quelconque des revendications 5-6, où le second dispositif de blocage comprend une rainure de blocage (64) au niveau du second côté opposé du panneau de construction.

9. Panneau de construction selon l'une quelconque des revendications précédentes, où le premier dispositif de blocage comprend une bande en saillie (60) avec un élément de blocage (63).

10. Panneau de construction selon la revendication 7, où le premier dispositif de blocage comprend une bande en saillie (60) avec un élément de blocage (63) et le second dispositif de blocage comprend une rainure de blocage (64) au niveau du second bord adjacent, où l'élément de blocage et la rainure de blocage sont configurés pour coopérer pour le blocage dans la position horizontale.

11. Panneau de construction selon la revendication 10 ou 7, où l'un du premier ou du second dispositif de blocage comprend une languette (61) et l'autre du premier ou du second dispositif de blocage comprend une rainure à languette (62), où la languette et la rainure à languette sont configurées pour coopérer pour le blocage dans la direction verticale.

12. Panneau de construction selon l'une quelconque des revendications précédentes, où l'élément d'écartement est en un matériau différent ou de propriétés différentes, par exemple d'espèce de bois différente et/ou de bois avec des directions des fibres du bois différentes, des lamelles de bois.
